# EUROPÄISCHE PATENTANMELDUNG

(11) **EP 3 766 720 A1**
(43) Veröffentlichungstag der Anmeldung: **20.01.2021**
(21) Anmeldenummer: 20185163.1
(22) Anmeldetag: 10.07.2020
(51) Int. Cl.: B60L 5/04, B60L 7/00, B60L 9/00, B60L 50/40, B60L 50/50, B60L 53/14, B60L 53/30, B60M 1/36

(54) **FAHRZEUG ZUM BETRIEB AN EINEM STRECKENSEITIGEN GLEICHSPANNUNGSNETZ**

(30) Priorität: 18.07.2019 DE 102019210641
(71) Anmelder: Siemens Mobility GmbH, 81739 München (DE)
(72) Erfinder: Glinka, Martin, 91080 Uttenreuth (DE); Goerner, Michael, 91054 Buckenhof (DE); März, Andreas, 91227 Leinburg (DE); Rengers, Nils, 90459 Nürnberg (DE)

(57) **Zusammenfassung**

Die Erfindung bezieht sich auf unter anderem auf ein gleichstrombetriebenes Fahrzeug (10) zum Betrieb an einem streckenseitigen Gleichspannungsnetz (20) mit einem internen elektrischen Energiespeicher (13, 13a, 13b), der beim Bremsen des Fahrzeugs (10) frei werdende Bremsenergie im Energiespeicher (13, 13a, 13b) speichern und gespeicherte Energie einer Traktionsanlage (14a, 14b) des Fahrzeugs (10) zum Antrieb zur Verfügung stellen kann, und einem Stromabnehmer (11, 11a, 11b) zum Anschluss an das streckenseitige Gleichspannungsnetz (20). Erfindungsgemäß ist vorgesehen, dass zwischen den elektrischen Energiespeicher (13, 13a, 13b) und den Stromabnehmer (11, 11a, 11b) eine Diode (12, 12a, 12b) geschaltet ist, und zwar in einer Polung, die selbsttätig einen Ladestromfluss vom Gleichspannungsnetz (20) durch die Diode (12, 12a, 12b) in den Energiespeicher (13, 13a, 13b) und ein Aufladen des Energiespeichers (13, 13a, 13b) ermöglicht, sofern die Gleichspannung (Un) des Gleichspannungsnetzes (20) die Energiespeicherspannung (Us) überschreitet, und ein Entladen des Energiespeichers (13, 13a, 13b) über die Diode (12, 12a, 12b) in Richtung des Gleichspannungsnetzes (20) selbsttätig blockiert, wenn die Gleichspannung (Un) des Gleichspannungsnetzes (20) die Energiespeicherspannung (Us) unterschreitet.

## Beschreibung

Die Erfindung bezieht sich auf gleichstrombetriebene Fahrzeuge zum Betrieb auf einer mit einem streckenseitigen Gleichspannungsnetz ausgestatteten Streckenanlage.

In streckenseitigen Gleichspannungsnetzen, insbesondere solchen mit begrenzter Energieeinspeiseleistung, kann es in höher belasteten Streckenabschnitten zu signifikanten Spannungsabfällen kommen. In nicht allen Fällen ist es erwünscht, dass es fahrzeugseitig zu einer Energierückspeisung in Richtung des Gleichspannungsnetzes kommt.

Der Erfindung liegt die Aufgabe zugrunde, ein Fahrzeug anzugeben, das für einen Betrieb an einem streckenseitigen Gleichspannungsnetz bzw. in einem mit einem Gleichspannungsnetz ausgestatteten Streckennetz besonders geeignet ist.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass zwischen einen elektrischen Energiespeicher und einen Stromabnehmer eine Diode geschaltet ist, und zwar in einer Polung, die selbsttätig einen Ladestromfluss vom Gleichspannungsnetz durch die Diode in den Energiespeicher und ein Aufladen des Energiespeichers ermöglicht, sofern die Gleichspannung des Gleichspannungsnetzes die Energiespeicherspannung überschreitet, und ein Entladen des Energiespeichers über die Diode in Richtung des Gleichspannungsnetzes selbsttätig blockiert, wenn die Gleichspannung des Gleichspannungsnetzes die Energiespeicherspannung unterschreitet.

Ein wesentlicher Vorteil des erfindungsgemäßen Fahrzeugs ist darin zu sehen, dass dieses durch die erfindungsgemäß vorgesehene Diode zwischen Energiespeicher und Stromabnehmer eine automatische Kopplung und Entkopplung des Energiespeichers vom Gleichspannungsnetz ermöglicht, so dass einerseits ein dauerhaftes Aufladen des Energiespeichers gewährleistet wird, sofern der Energiespeicher eine geringere elektrische Spannung als das streckenseitige Gleichspannungsnetz aufweist, aber andererseits nicht entladen wird, wenn die Energiespeicherspannung des Energiespeichers die elektrische Gleichspannung des Gleichspannungsnetzes unterschreitet. Mit anderen Worten besteht ein wesentlicher Vorteil des erfindungsgemäßen Fahrzeugs in der automatischen Kopplung und Entkopplung des Energiespeichers vom streckenseitigen Gleichspannungsnetz in Abhängigkeit vom Ladezustand und Netzzustand des streckenseitigen Gleichspannungsnetzes.

Vorteilhaft ist es, wenn parallel zu der Diode ein Schalter angeordnet ist, der im eingeschalteten Zustand die diodenseitige Blockade einer Energierückspeisung aufhebt und eine Energierückspeisung an der Diode vorbei in das Gleichspannungsnetz ermöglicht, also als Bypass fungiert, wenn die Gleichspannung des Gleichspannungsnetzes kleiner als die aktuelle Energiespeicherspannung des Energiespeichers ist.

Der Schalter ist vorzugsweise ein mechanischer Trennschalter.

Alternativ kann in vorteilhafter Weise vorgesehen sein, dass der Schalter ein Leistungsschalter ist, der zum Schalten von Strömen geeignet ist. Insbesondere kann der Schalter ein Halbleiterschalter sein oder einen Halbleiterschalter, insbesondere einen Bipolartransistor mit isolierter Gateelektrode, IGBT, umfassen.

Das Fahrzeug weist bevorzugt eine Steuereinrichtung auf, die eine Energierückspeisung in das Gleichspannungsnetz veranlasst und den Schalter schließt, wenn die Spannung des Energiespeichers eine vorgegebene Rückspeiseminimalspannung aufweist oder überschreitet und die Gleichspannung des Gleichspannungsnetzes kleiner als eine vorgegebene Netzminimalspannung wird.

Alternativ oder zusätzlich kann die Steuereinrichtung derart ausgestaltet sein, dass sie eine Energierückspeisung in das Gleichspannungsnetz veranlasst und den Schalter schließt, wenn die Spannung des Energiespeichers eine vorgegebene Rückspeiseminimalspannung aufweist oder überschreitet und der zeitliche Abfall bzw. Einbruch der Gleichspannung des Gleichspannungsnetzes, insbesondere die zeitliche mathematische Ableitung der Gleichspannung des Gleichspannungsnetzes nach der Zeit, ein vorgegebenes Maß überschreitet.

Vorzugsweise wird die Steuereinrichtung den Schalter wieder öffnen, wenn die Gleichspannung des Gleichspannungsnetzes unter eine für den Energiespeicher vorgegebene Minimalspannung fällt.

Das Fahrzeug kann zwei oder mehr Traktionsanlagen aufweisen.

Der interne elektrische Energiespeicher kann allen Traktionsanlagen oder einer Teilgruppe an Traktionsanlagen zugeordnet sein.

Auch können zwei oder mehr Speichermodule vorhanden sein, die individuell einzelnen oder mehreren Traktionsanlagen zugeordnet sind.

Darüber hinaus können in vorteilhafter Weise zwei oder mehr Stromabnehmer vorhanden sein, die jeweils einer Traktionsanlage oder mehreren Traktionsanlagen zugeordnet sind.

Bei einer als besonders bevorzugt angesehenen Ausführungsvariante ist vorgesehen, dass allen Traktionsanlagen oder einer Teilgruppe an Traktionsanlagen ein oder jeweils ein mit der jeweiligen Traktionsanlage verbindbarer interner elektrischer Energiespeicher zugeordnet ist, der beim Bremsen frei werdende Bremsenergie speichern und gespeicherte Energie der oder den zugeordneten Traktionsanlage(n) zur Verfügung stellen kann, und zwischen dem oder den elektrischen Energiespeichern und dem oder den zugeordneten Stromabnehmern eine oder jeweils eine Diode geschaltet ist, und zwar in einer Polung, die einen Ladestromfluss vom Gleichspannungsnetz in den jeweiligen Energiespeicher und ein Aufladen des Energiespeichers ermöglicht und ein Entladen des Energiespeichers blockiert.

Bei der letztgenannten Variante kann darüber hinaus in vorteilhafter Weise vorgesehen sein, dass bei einer anderen Teilgruppe an Traktionsanlagen der oder die daran angeschlossenen Energiespeicher ohne Diode zwischen Energiespeicher und Gleichspannungsnetz, also ohne Diodenentkopplung, mit dem Gleichspannungsnetz in Verbindung stehen.

Bei dem gleichstrombetriebenen Fahrzeug handelt es sich vorzugsweise um ein Schienenfahrzeug zum Betrieb in einem Schienennetz, das mit einem streckenseitigem Gleichspannungsnetz ausgestattet ist.

Die Erfindung bezieht sich außerdem auf eine Streckenanlage, insbesondere eine Schienen- oder Eisenbahngleisanlage, mit einem streckenseitigen Gleichspannungsnetz und mit zumindest einem auf der Streckenanlage fahrenden, gleichstrombetriebenen Fahrzeug, wie oben beschrieben, das von dem Gleichspannungsnetz mit Gleichspannung versorgt wird. Erfindungsgemäß ist vorgesehen, dass die zwischen den elektrischen Energiespeicher des Fahrzeugs und den Stromabnehmer des Fahrzeugs geschaltete Diode selbsttätig einen Ladestromfluss vom Gleichspannungsnetz durch die Diode in den Energiespeicher und ein Aufladen des Energiespeichers ermöglicht, sobald die Gleichspannung des Gleichspannungsnetzes die Energiespeicherspannung überschreitet, und ein Entladen des Energiespeichers über die Diode in Richtung des Gleichspannungsnetzes selbsttätig blockiert, wenn die Gleichspannung des Gleichspannungsnetzes die Energiespeicherspannung unterschreitet.

Die Erfindung wird nachfolgend anhand von Ausführungsbeispielen näher erläutert, dabei zeigen beispielhaft:
- Figur 1: ein Ausführungsbeispiel für ein erfindungsgemäßes Fahrzeug, bei dem ein Energiespeicher des Fahrzeugs über eine Diode mit einem auf einem positiven Potential liegenden streckenseitigen Gleichspannungsnetz in Verbindung steht,
- Figur 2: ein Ausführungsbeispiel für ein erfindungsgemäßes Fahrzeug, bei dem zwei Traktionsanlagen jeweils ein Energiespeicher und eine Diode zugeordnet ist,
- Figur 3: ein Ausführungsbeispiel für ein erfindungsgemäßes Fahrzeug, bei dem zwei Traktionsanlagen jeweils ein Energiespeicher, eine Diode und ein Stromabnehmer zugeordnet ist,
- Figur 4: ein Ausführungsbeispiel für ein erfindungsgemäßes Fahrzeug, bei dem parallel zu einer Diode ein Schalter angeordnet ist, der die Diode in Sperrspannung überbrücken kann,
- Figur 5: ein Ausführungsbeispiel für ein erfindungsgemäßes Fahrzeug, bei dem die Ansteuerung des zur Diode parallel geschalteten Schalters durch eine schaltereigene Steuereinrichtung erfolgt,
- Figur 6: ein Ausführungsbeispiel für ein erfindungsgemäßes Fahrzeug, bei dem zwei Traktionsanlagen jeweils ein Energiespeicher und eine Parallelschaltung aus Diode und Bypassschalter zugeordnet ist,
- Figur 7: ein Ausführungsbeispiel für ein zweigliedriges Fahrzeug, bei dem eine Teilgruppe an Energiespeichern unmittelbar - ohne Diode zwischen Energiespeicher und Gleichspannungsnetz - und eine andere Teilgruppe an Energiespeichern mittelbar - mit Diode zwischen Energiespeicher und Gleichspannungsnetz - mit dem Gleichspannungsnetz in Verbindung steht, und
- Figur 8: ein Ausführungsbeispiel für ein erfindungsgemäßes Fahrzeug, bei dem zu einer Diode ein Hauptschalter in Reihe geschaltet.

In den Figuren werden der Übersicht halber für identische oder vergleichbare Komponenten stets dieselben Bezugszeichen verwendet.

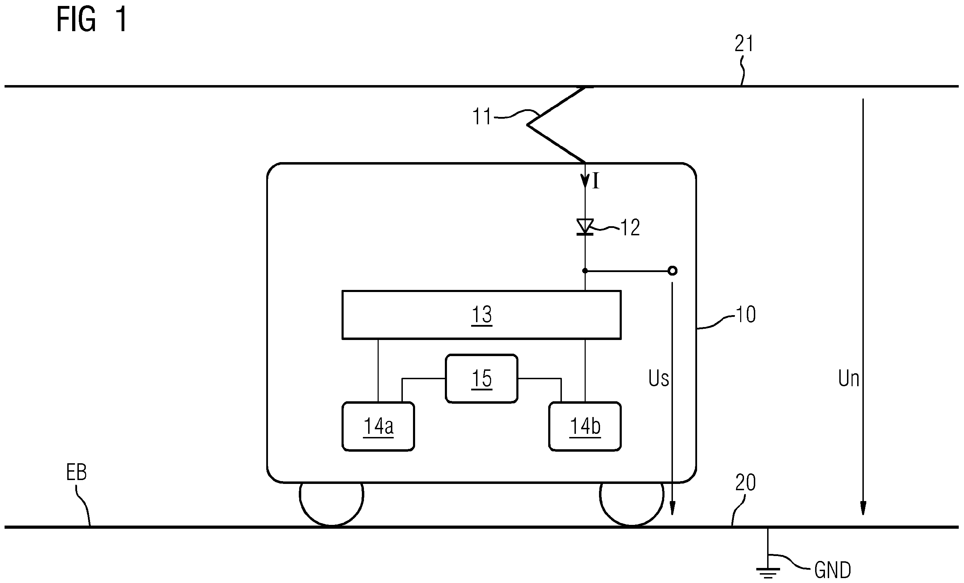

Die Figur 1 zeigt ein Fahrzeug 10, bei dem es sich beispielsweise um ein Schienenfahrzeug handelt. Das Fahrzeug 10 steht über einen Stromabnehmer 11 mit einer Stromschiene oder einem Fahrdraht 21 eines streckenseitigen Gleichspannungsnetzes 20 in Verbindung. Bei dem Ausführungsbeispiel gemäß Figur 1 weist das streckenseitige Gleichspannungsnetz 20 ein positives elektrisches Potential gegenüber dem Erdpotential GND auf. Das Gleichspannungsnetz 20 bildet einen Bestandteil einer nur angedeuteten Eisenbahngleisanlage EB, auf dem das Schienenfahrzeug 10 strombetrieben fährt.

Eine Diode 12 verbindet den Stromabnehmer 11 mit einem nachgeordneten elektrischen Energiespeicher 13, der mit zwei Traktionsanlagen (Antrieben) 14a und 14b des Fahrzeugs 10 in Verbindung steht. Die Ansteuerung der Traktionsanlagen 14a und 14b erfolgt durch eine Steuereinrichtung 15. Bei dem Energiespeicher 13 handelt es sich vorzugsweise um eine Batterie oder einen Kondensator.

Bei dem Ausführungsbeispiel gemäß Figur 1 ist die Diode 12 derart zwischen den Stromabnehmer 11 und den Energiespeicher 13 geschaltet, dass stets ein Strom I vom streckenseitigen Gleichspannungsnetz 20 über den Stromabnehmer 11 in den Energiespeicher 13 fließen kann, sofern die elektrische Gleichspannung Un am Fahrdraht 21 größer ist als die aktuelle Energiespeicherspannung Us des Energiespeichers 13.

Erreicht die Energiespeicherspannung Us des Energiespeichers 13 die Gleichspannung Un am Fahrdraht 21 oder überschreitet sie diese, so blockiert die Diode 12 selbsttätig einen Stromfluss in Richtung des Fahrdrahts 21 bzw. in Richtung des streckenseitigen Gleichspannungsnetzes 20. Die Diode 12 entkoppelt somit automatisch ohne jegliche Ansteuerung von außen einen Abfluss von Energie aus dem Energiespeicher 13 in Richtung des Fahrdrahts 21 bzw. in Richtung des streckenseitigen Gleichspannungsnetzes 20.

Bei dem Ausführungsbeispiel gemäß der Figur 1 wird durch die Diode 12 zwischen dem Energiespeicher 13 und dem Stromabnehmer 11 also in besonders einfacher Weise eine Art Ladeeinrichtung gebildet, die dafür sorgt, dass der elektrische Energiespeicher 13 geladen wird, wenn die Gleichspannung Un des Gleichspannungsnetzes 20 die Energiespeicherspannung Us des Energiespeichers 13 überschreitet, und ein Entladen in Richtung des Gleichspannungsnetzes 20 stets zuverlässig verhindert.

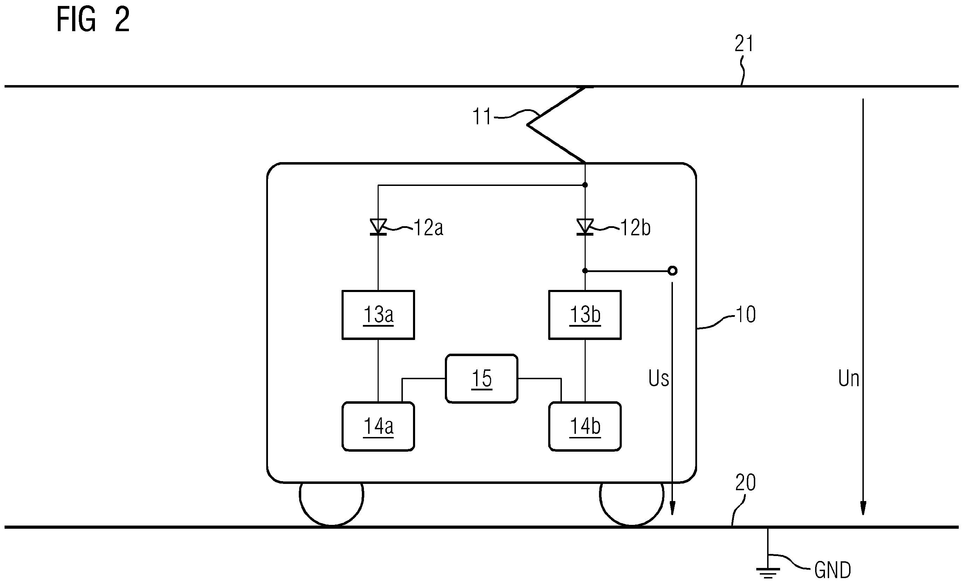

Die Figur 2 zeigt ein Ausführungsbeispiel für ein Fahrzeug 10, bei dem zwei Traktionsanlagen 14a und 14b jeweils mit einem eigenen bzw. individuellen Energiespeicher 13a und 13b gekoppelt sind. Die beiden Energiespeicher 13a und 13b stehen über individuell zugeordnete Dioden 12a und 12b mit dem Stromabnehmer 11 des Fahrzeugs 10 in Verbindung. Je nach dem Ladezustand der Energiespeicher 13a und 13b und der jeweiligen Spannung am Fahrdraht 21 des streckenseitigen Gleichspannungsnetzes 20 werden die Energiespeicher 13a und 13b entweder geladen, wenn ihre jeweilige Energiespeicherspannung Us kleiner ist als die Gleichspannung Un am Fahrdraht 21 ist, oder vom Fahrdraht 21 entkoppelt, wenn deren Energiespeicherspannung Us der Gleichspannung Un am Fahrdraht 21 entspricht bzw. diese überschreitet. Im Übrigen gelten die obigen Ausführungen im Zusammenhang mit der Figur 1 entsprechend.

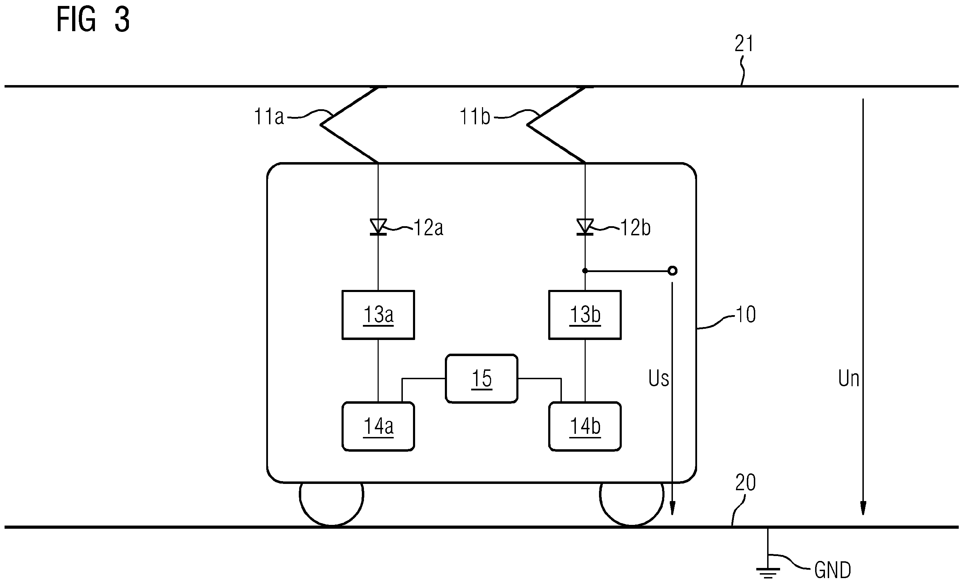

Die Figur 3 zeigt ein Ausführungsbeispiel für ein Fahrzeug 10, bei dem zwei Traktionsanlagen 14a und 14b jeweils ein eigener Energiespeicher 13a bzw. 13b sowie eine eigene Diode 12a bzw. 12b zugeordnet ist, wie dies bei dem Ausführungsbeispiel gemäß Figur 2 der Fall ist. Im Unterschied zu dem Ausführungsbeispiel gemäß Figur 2 stehen die beiden Dioden 12a und 12b nicht mit demselben Stromabnehmer in Verbindung, sondern jeweils mit einem eigenen Stromabnehmer 11a und 11b. Im Übrigen gelten die obigen Ausführungen im Zusammenhang mit der Figur 2 entsprechend.

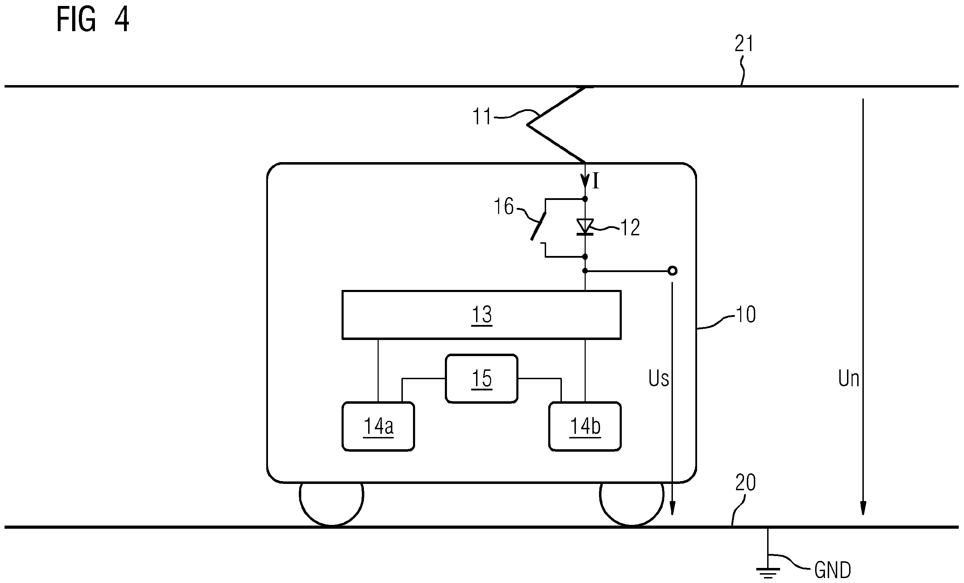

Die Figur 4 zeigt eine Ausführungsvariante des Ausführungsbeispiels gemäß Figur 1. Bei der Ausführungsvariante gemäß Figur 4 ist parallel zur Diode 12 ein Schalter 16 angeordnet, der im eingeschalteten Zustand eine Energierückspeisung vom Energiespeicher 13 an der Diode 12 vorbei als eine Art "Bypass" in das Gleichspannungsnetz 20 ermöglicht, wenn die Gleichspannung Un des Gleichspannungsnetzes 20 kleiner als die aktuelle Energiespeicherspannung Us des Energiespeichers 13 ist.

Bei dem Ausführungsbeispiel gemäß Figur 4 lässt sich die durch die Diode 12 bewirkte Entkopplung des Energiespeichers 13 vom Fahrdraht 21 für den Fall, dass die Spannung am Fahrdraht 21 die Spannung am Energiespeicher 13 unterschreitet, rückgängig machen bzw. deaktivieren, so dass eine Energierückspeisung in den Fahrdraht 21 bzw. in das streckenseitige Gleichspannungsnetz 20 möglich wird, beispielsweise um das Gleichspannungsnetz 20 zu stützen oder überflüssige Energie, die im Energiespeicher 13 nicht mehr gespeichert werden kann, dem Gleichspannungsnetz 20 zugänglich zu machen.

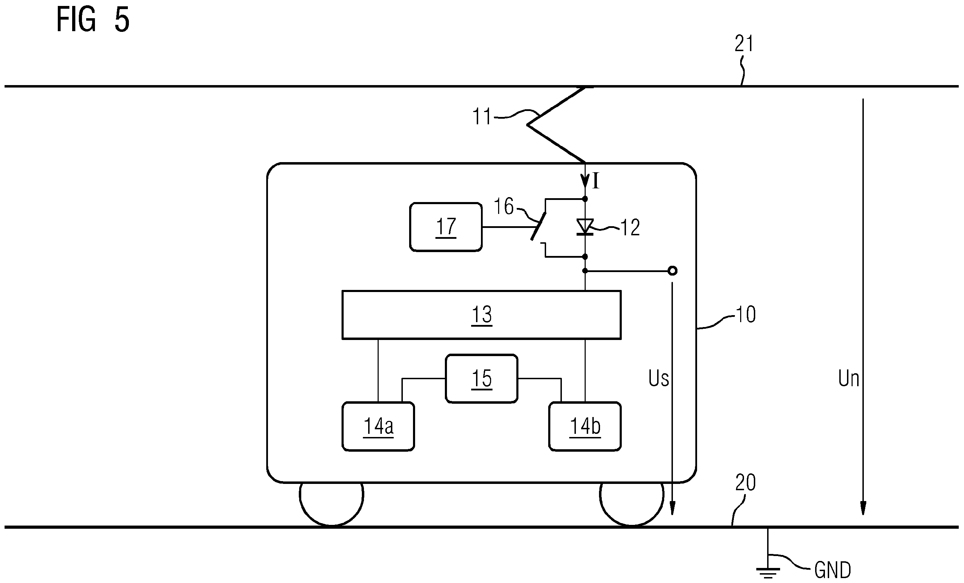

Die Ansteuerung des Schalters 16 kann durch die Steuereinrichtung 15 erfolgen, die auch die Traktionsanlagen 14a und 14b ansteuert und den Fahrbetrieb des Fahrzeugs 10 bestimmt. Alternativ kann die Ansteuerung des Schalters 16 auch durch eine zusätzliche Steuereinrichtung 17 erfolgen, wie dies in der Figur 5 gezeigt ist. Bei der Ausführungsform gemäß Figur 5 ist also eine Steuereinrichtung 15 speziell für den Betrieb der Traktionsanlagen 14a und 14b sowie eine separate Steuereinrichtung 17 für den Betrieb des Schalters 16 vorgesehen.

Die Steuereinrichtung 15 bzw. 17 ist zur Steuerung des Schalter 16 vorzugsweise derart ausgebildet, dass sie eine Energierückspeisung in das Gleichspannungsnetz 20 veranlasst und den Schalter 16 schließt, wenn die Spannung Us des Energiespeichers 13 eine vorgegebene Rückspeiseminimalspannung aufweist oder überschreitet und die Gleichspannung Un des Gleichspannungsnetzes 20 kleiner als eine vorgegebene Netzminimalspannung wird.

Auch kann die Steuereinrichtung 15 bzw. 17 den Schalter 16 schließen, wenn die Spannung Us des Energiespeichers 13 eine vorgegebene Rückspeiseminimalspannung aufweist oder überschreitet und der zeitliche Abfall (Einbruch) der Gleichspannung des Gleichspannungsnetzes, insbesondere die zeitliche mathematische Ableitung der Gleichspannung Un des Gleichspannungsnetzes 20 nach der Zeit, ein vorgegebenes Maß überschreitet.

Im Übrigen gelten die obigen Ausführungen im Zusammenhang mit der Figur 4 entsprechend.

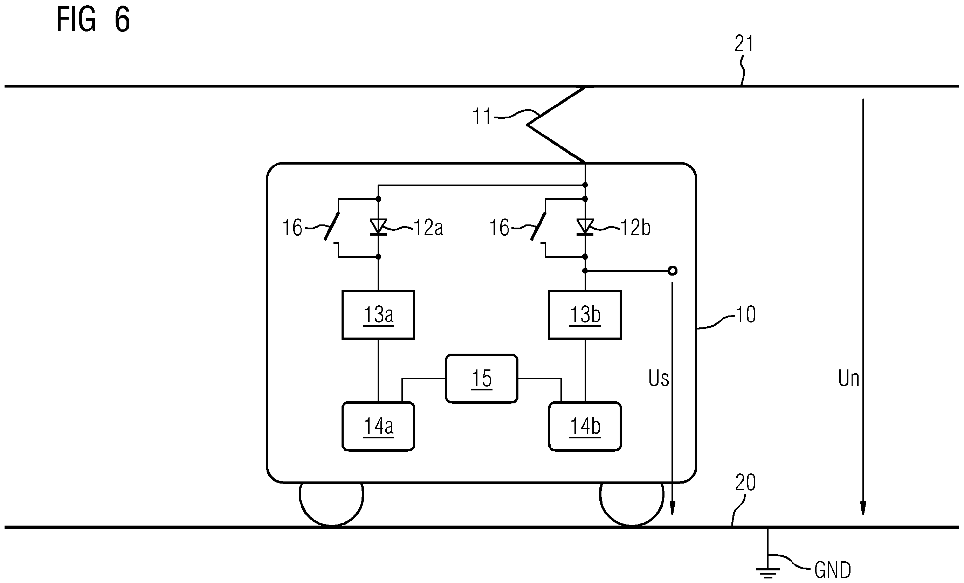

Ein zusätzlicher Schalter 16 parallel zu den Dioden 12a und 12b kann auch bei der Ausführungsvariante gemäß Figur 2, wie in der Figur 6 dargestellt ist, oder der Ausführungsvariante gemäß Figur 3 vorhanden sein. In diesem Zusammenhang mit dem zusätzlichen Schalter 16 gelten die obigen Ausführungen im Zusammenhang mit den Figuren 4 und 5 entsprechend.

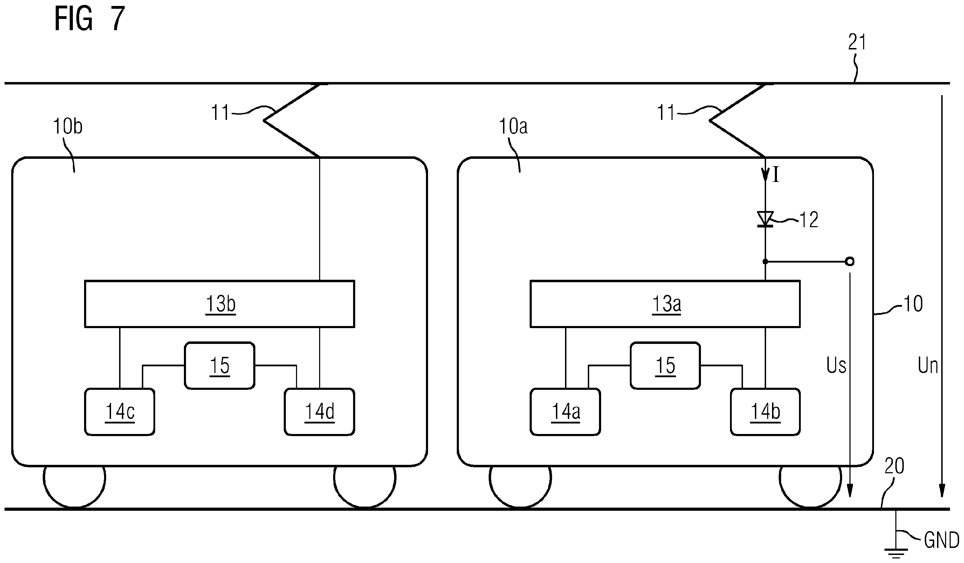

Die Figur 7 zeigt ein Ausführungsbeispiel für ein Fahrzeug, das mit einer Vielzahl an Traktionsanlagen 14a, 14b, 14c und 14d ausgestattet ist.

Eine erste Teilgruppe wird durch die Traktionsanlagen 14a und 14b gebildet, deren zugeordneter Energiespeicher 13a über eine Diode 12 mit dem Gleichspannungsnetz 20 in Verbindung steht.

Eine zweite Teilgruppe, die durch die Traktionsanlagen 14c und 14d gebildet ist, steht mit einem Energiespeicher 13b in Verbindung, der ohne Diode unmittelbar mit dem Gleichspannungsnetz 20 gekoppelt ist, so dass dieser stets mit dem Gleichspannungsnetz verbunden bleibt, und zwar unabhängig vom jeweiligen Spannungszustand des Gleichspannungsnetzes 20.

Bei dem Ausführungsbeispiel gemäß der Figur 7 ist das Fahrzeug mehrteilig und weist zwei miteinander gekoppelte Wagen 10a und 10b auf. Die erste Teilgruppe mit den Traktionsanlagen 14a und 14b ist in einem der beiden Wagen 10a angeordnet und die zweite Teilgruppe mit den Traktionsanlagen 14c und 14d ist in dem anderen der zwei Wagen 10b angeordnet. Diese Zuordnung ist nur beispielhaft zu verstehen. Bei mehrgliedrigen Fahrzeugen können in einem oder mehreren Wagen des Fahrzeugs sowohl ein oder mehr Energiespeicher, die über eine Diode 12 mit oder ohne parallel geschalteten Schalter 16 mit dem Gleichspannungsnetz 20 verbunden sind, als auch ein oder mehr Energiespeicher, die ohne Diode unmittelbar mit dem Gleichspannungsnetz 20 verbunden sind, vorhanden sein.

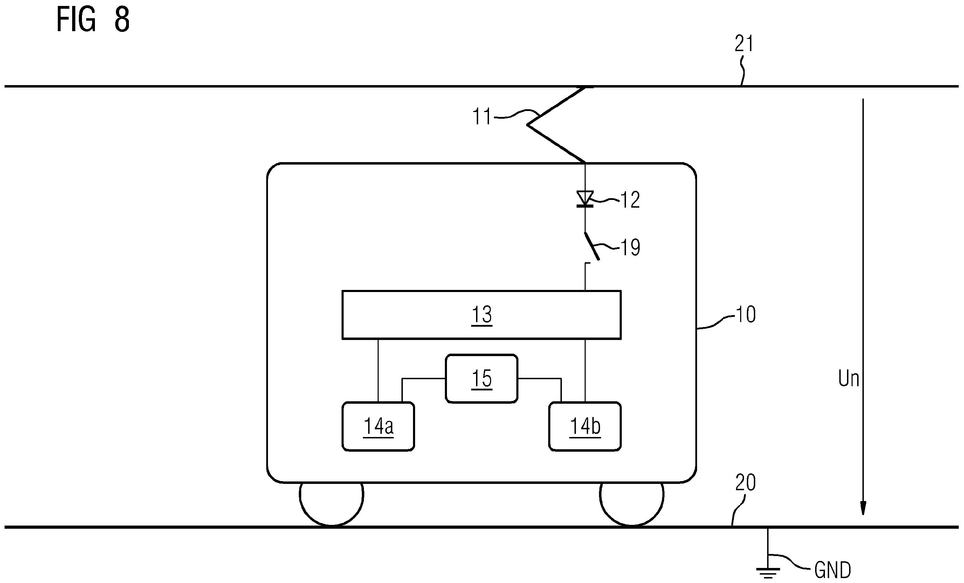

Obwohl in den Figuren 1 bis 7 nicht explizit gezeigt, kann in dem Pfad zwischen dem Stromabnehmer 11 und dem Energiespeicher 13 in Reihe mit der Diode 12 auch ein weiterer Hauptschalter 19 angeordnet sein, der beispielhaft in der Figur 8 gezeigt ist und den oder die Energiespeicher von dem Gleichspannungsnetz 20 trennen kann. An der oben beschriebenen Arbeitsweise der Diode 12 und des ggf. dazu parallel geschalteten Schalters 16 ändert ein solcher zusätzlicher Hauptschalter im eingeschalteten Zustand des Hauptschalters selbstverständlich nichts.

Bei den Ausführungsbeispielen gemäß den Figuren 1 bis 7 ist das elektrische Potential des Fahrdrahts 21 gegenüber Masse bzw. dem Erdpotential GND positiv. Alternativ kann das elektrische Potential des Fahrdrahts 21 gegenüber Masse bzw. Erdpotential GND negativ sein; im letztgenannten Falle ist die Diode 12 bzw. sind die Dioden elektrisch invers bzw. mit invertierter Polung zwischen den Stromabnehmer 11 und den oder die Energiespeicher 13 zu schalten.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Fahrzeug
- 10a: Wagen
- 10b: Wagen
- 11: Stromabnehmer
- 11a: Stromabnehmer
- 11b: Stromabnehmer
- 12: Diode
- 12a: Diode
- 12b: Diode
- 13: Energiespeicher
- 13a: Energiespeicher
- 13b: Energiespeicher
- 14a: Traktionsanlage
- 14b: Traktionsanlage
- 14c: Traktionsanlage
- 14d: Traktionsanlage
- 15: Steuereinrichtung
- 16: Schalter
- 17: Steuereinrichtung
- 19: Hauptschalter
- 20: Gleichspannungsnetz
- 21: Fahrdraht / Stromschiene

- EB: Eisenbahngleisanlage
- GND: Erdpotential
- I: Strom
- Un: Gleichspannung
- Us: Energiespeicherspannung

## Patentansprüche

1. Gleichstrombetriebenes Fahrzeug (10) zum Betrieb an einem streckenseitigen Gleichspannungsnetz (20), mit
- einem internen elektrischen Energiespeicher (13, 13a, 13b), der beim Bremsen des Fahrzeugs (10) frei werdende Bremsenergie im Energiespeicher (13, 13a, 13b) speichern und gespeicherte Energie einer Traktionsanlage (14a, 14b) des Fahrzeugs (10) zum Antrieb zur Verfügung stellen kann, und
- einem Stromabnehmer (11, 11a, 11b) zum Anschluss an das streckenseitige Gleichspannungsnetz (20),
**dadurch gekennzeichnet, dass** zwischen den elektrischen Energiespeicher (13, 13a, 13b) und den Stromabnehmer (11, 11a, 11b) eine Diode (12, 12a, 12b) geschaltet ist, und zwar in einer Polung, die selbsttätig einen Ladestromfluss vom Gleichspannungsnetz (20) durch die Diode (12, 12a, 12b) in den Energiespeicher (13, 13a, 13b) und ein Aufladen des Energiespeichers (13, 13a, 13b) ermöglicht, sofern die Gleichspannung (Un) des Gleichspannungsnetzes (20) die Energiespeicherspannung (Us) überschreitet, und ein Entladen des Energiespeichers (13, 13a, 13b) über die Diode (12, 12a, 12b) in Richtung des Gleichspannungsnetzes (20) selbsttätig blockiert, wenn die Gleichspannung (Un) des Gleichspannungsnetzes (20) die Energiespeicherspannung (Us) unterschreitet.

2. Fahrzeug (10) nach Anspruch 1,
**dadurch gekennzeichnet, dass** parallel zu der Diode (12, 12a, 12b) ein Schalter (16) angeordnet ist, der im eingeschalteten Zustand die diodenseitige Blockade einer Energierückspeisung aufhebt und eine Energierückspeisung an der Diode (12, 12a, 12b) vorbei in das Gleichspannungsnetz (20) ermöglicht, wenn die Gleichspannung (Un) des Gleichspannungsnetzes (20) kleiner als die aktuelle Energiespeicherspannung (Us) des Energiespeichers (13, 13a, 13b) ist.

3. Fahrzeug (10) nach Anspruch 2,
**dadurch gekennzeichnet, dass** der Schalter (16) ein mechanischer Trennschalter ist.

4. Fahrzeug (10) nach Anspruch 2,
**dadurch gekennzeichnet, dass** der Schalter (16) ein Leistungsschalter ist, der zum Schalten von Strömen geeignet ist.

5. Fahrzeug (10) nach einem der voranstehenden Ansprüche,
**dadurch gekennzeichnet, dass** der Schalter (16) ein Halbleiterschalter ist oder einen Halbleiterschalter, insbesondere einen Bipolartransistor mit isolierter Gateelektrode, IGBT, umfasst.

6. Fahrzeug (10) nach einem der voranstehenden Ansprüche,
**dadurch gekennzeichnet, dass** das Fahrzeug (10) eine Steuereinrichtung (15, 17) aufweist, die eine Energierückspeisung in das Gleichspannungsnetz (20) veranlasst und den Schalter (16) schließt, wenn
- die Energiespeicherspannung (Us) des Energiespeichers (13, 13a, 13b) eine vorgegebene Rückspeiseminimalspannung aufweist oder überschreitet und
- der zeitliche Abfall der Gleichspannung (Un) des Gleichspannungsnetzes (20), insbesondere die zeitliche Ableitung der Gleichspannung (Un) des Gleichspannungsnetzes (20) nach der Zeit, ein vorgegebenes Maß überschreitet.

7. Fahrzeug (10) nach einem der voranstehenden Ansprüche,
**dadurch gekennzeichnet, dass** das Fahrzeug (10) eine Steuereinrichtung (15, 17) aufweist, die eine Energierückspeisung in das Gleichspannungsnetz (20) veranlasst und den Schalter (16) schließt, wenn
- die Energiespeicherspannung (Us) des Energiespeichers (13, 13a, 13b) eine vorgegebene Rückspeiseminimalspannung aufweist oder überschreitet und
- die Gleichspannung (Un) des Gleichspannungsnetzes (20) kleiner als eine vorgegebene Netzminimalspannung wird.

8. Fahrzeug (10) nach einem der voranstehenden Ansprüche 6 bis 7,
**dadurch gekennzeichnet, dass** die Steuereinrichtung (15, 17) derart ausgestaltet ist, dass sie den Schalter (16) öffnet, wenn die Gleichspannung (Un) des Gleichspannungsnetzes (20) unter eine für den Energiespeicher (13, 13a, 13b) vorgegebene Minimalspannung fällt.

9. Fahrzeug (10) nach einem der voranstehenden Ansprüche,
**dadurch gekennzeichnet, dass** das Fahrzeug (10) zwei oder mehr Traktionsanlagen (14a, 14b) aufweist.

10. Fahrzeug (10) nach Anspruch 9,
**dadurch gekennzeichnet, dass** der interne elektrische Energiespeicher (13, 13a, 13b) allen Traktionsanlagen (14a, 14b) oder einer Teilgruppe der Traktionsanlagen (14a, 14b) zugeordnet ist.

11. Fahrzeug (10) nach einem der voranstehenden Ansprüche,
**dadurch gekennzeichnet, dass** zwei oder mehr Speichermodule vorhanden sind, die individuell einzelnen oder mehreren Traktionsanlagen (14a, 14b) zugeordnet sind.

12. Fahrzeug (10) nach einem der voranstehenden Ansprüche,
**dadurch gekennzeichnet, dass** zwei oder mehr Stromabnehmer (11, 11a, 11b) vorhanden sind, die jeweils einer Traktionsanlage (14a, 14b) oder mehreren Traktionsanlagen (14a, 14b) zugeordnet sind.

13. Fahrzeug (10) nach einem der voranstehenden Ansprüche,
**dadurch gekennzeichnet, dass**
- allen Traktionsanlagen (14a, 14b) oder einer Teilgruppe an Traktionsanlagen (14a, 14b) ein oder jeweils ein mit der jeweiligen Traktionsanlage (14a, 14b) verbindbarer interner elektrischer Energiespeicher (13, 13a, 13b) zugeordnet ist, der beim Bremsen frei werdende Bremsenergie speichern und gespeicherte Energie der oder den zugeordneten Traktionsanlagen (14a, 14b) zur Verfügung stellen kann, und
- zwischen dem oder den elektrischen Energiespeichern und dem oder den zugeordneten Stromabnehmern eine oder jeweils eine Diode (12, 12a, 12b) geschaltet ist, und zwar in einer Polung, die einen Ladestromfluss vom Gleichspannungsnetz (20) in den jeweiligen Energiespeicher (13, 13a, 13b) und ein Aufladen des Energiespeichers (13, 13a, 13b) ermöglicht und ein Entladen des Energiespeichers (13, 13a, 13b) blockiert.

14. Fahrzeug (10) nach Anspruch 13,
**dadurch gekennzeichnet, dass** bei einer anderen Teilgruppe an Traktionsanlagen (14c, 14d) der oder die daran angeschlossenen Energiespeicher (13b) ohne Diode zwischen Energiespeicher (13b) und Gleichspannungsnetz (20), also ohne Diodenentkopplung, mit dem Gleichspannungsnetz (20) in Verbindung stehen.

15. Streckenanlage, insbesondere Schienen- oder Eisenbahngleisanlage (EB), mit einem streckenseitigen Gleichspannungsnetz (20) und mit zumindest einem auf der Streckenanlage fahrenden, gleichstrombetriebenen Fahrzeug (10) nach einem der voranstehenden Ansprüche, das von dem Gleichspannungsnetz (20) mit Gleichspannung (Un) versorgt wird,
**dadurch gekennzeichnet, dass** die zwischen den elektrischen Energiespeicher (13, 13a, 13b) des Fahrzeugs (10) und den Stromabnehmer (11, 11a, 11b) des Fahrzeugs (10) geschaltete Diode (12, 12a, 12b) selbsttätig einen Ladestromfluss vom Gleichspannungsnetz (20) durch die Diode (12, 12a, 12b) in den Energiespeicher (13, 13a, 13b) und ein Aufladen des Energiespeichers (13, 13a, 13b) ermöglicht, sobald die Gleichspannung (Un) des Gleichspannungsnetzes (20) die Energiespeicherspannung (Us) überschreitet, und ein Entladen des Energiespeichers (13, 13a, 13b) über die Diode (12, 12a, 12b) in Richtung des Gleichspannungsnetzes (20) selbsttätig blockiert, wenn die Gleichspannung (Un) des Gleichspannungsnetzes (20) die Energiespeicherspannung (Us) unterschreitet.
